# EUROPEAN PATENT SPECIFICATION

(11) **EP 2 043 812 B1**
(45) Date of publication and mention of the grant of the patent: **01.12.2010**
(21) Application number: 07764482.1
(22) Date of filing: 12.07.2007
(51) Int. Cl.: B23K 26/40, B23K 26/42, C25F 3/14

(54) **COMBINED ELECTROCHEMICAL AND LASER MICROMACHINING PROCESS FOR CREATING ULTRA-THIN SURFACES**
KOMBINIERTER ELEKTROCHEMISCHER UND LASER-MIKROBEARBEITUNGSPROZESS ZUR ERZEUGUNG VON ULTRADÜNNEN FLÄCHEN
PROCÉDÉ ÉLECTROCHIMIQUE ET DE MICRO-USINAGE AU LASER COMBINÉ POUR CRÉER DES SURFACES ULTRAMINCES

(30) Priority: 13.07.2006 DK 200600971
(43) Date of publication of application: 08.04.2009
(73) Proprietor: BANG & OLUFSEN A/S, 7600 Struer (DK)
(72) Inventor: PRICHYSTAL, Jan Phuklin, 7600 Struer (DK)
(74) Representative: Tellefsen, Jens J.
(86) International application number: PCT/DK2007/000354
(87) International publication number: WO 2008/006375

(56) References cited:
- EP-A1- 0 019 064
- WO-A-2004/077388

## Description

### Field of the Invention

The present invention relates to a process for the manufacture of ultra-thin sections in an electrically conducting material.

### Background of the Invention

In the art it has been suggested and in particular by the same applicants prior patent application published under WO 2004/077388 to create a plate where one surface, i.e. the user's interface appears to be without markings whereas on the backside apertures (blind holes) are provided so that it is possible to shine light through these apertures whereby the front side of the panel will indicate symbols or areas where interaction with the display unit may be carried out. The prior art document further describes a process for the manufacture wherein a UV-excimer femtosecond laser was used in order to create a number of dots approximately one millimetre by one millimetre in area where the translucency in the bottom of the cavities, i.e. in each thin section was 0.1 percent.

This process, however, was very efficient in creating the grids of dots which together formed the symbols on the front side of panels produced by this method, but the production method was extremely time-consuming in that the laser process, although being very precise, is extremely time-consuming.

In EP0019064 disclosing a process according to the preamble of claim 1, a method for electro-chemical removal of metal from a metal surface is described. The object to be worked on, is immersed in an etching or electrolytic suspension, in which is also arranged a cathode. By directing a concentrated bean of electromagnetic energy at the desired positions where it is desired to remove material, the electrochemical process is accelerated and efficiently removes material from the surface.

### Object of the Invention

It is therefore an object of the present invention to provide a process for the manufacture of ultra-thin sections in metals in general, but especially in any conductive material in a faster and more rational and thereby more economic manner than what is known from WO 2004/077388.

### Description of the Invention

The invention addresses this problem by providing a process for the manufacture of ultra-thin sections in an electrically conducting material, comprising:
- firstly removing material in an electrochemical process to a material thickness of approximately 10 to 20 micrometers;
- secondly removing further material by a laser micromachining process to a material thickness of 1 to 5 micrometers.

By combining the two methods it is possible by the electrochemical process quickly to remove a substantial amount of material. The electrochemical process is not as precise and accurate so that it may be possible to solely rely on and use this method in order to create the ultra-thin sections or translucent sections. However, by removing material by an electrochemical process down to a thickness of approx. 10-12 micrometres, enough margin is provided, so that the electrochemical process may be controlled in a manner so that it is satisfied that there is a material thickness left at the bottom of this first cavity. By thereafter applying the laser technique, in a laser micromachining process, the remaining material down to a predetermined level, e.g. 1-5 micrometres, may be achieved relatively rapidly, so that a relatively quick process for the manufacture of these ultra-thin sections in an electrically conducting material is achieved.

In a further advantageous embodiment of the invention the electrochemical process is a controlled anodic dissolution process where the material is the anode and a tool having a distal end acting as cathode, so that a reaction cell is created between the anode and cathode, and that a salt containing electrolyte is led to the reaction cell through a conduit in the tool.

The control of the electrochemical process may be carried out by controlling the feed of the tool, i.e. the cathode. The electrolyte is selected according to the electrically conducting material. Examples of electrolytes in combination with materials will be listed below.

In order to control the electrochemical process as many parameters as possible should be maintained constant. Therefore, in a further advantageous embodiment the electrolyte is forced through the conduit to the reaction cell, and that the distance between the anode and cathode during the dissolving process is maintained substantially constant.

In this manner and in particular when the voltage, current and current density are maintained substantially constant, the feed of the tool into the cavity, created by the electro-chemical process and the flow of electrolyte will determine the speed with which the hole is created by the tool.

The tool, i.e. the anode, in an example has a distal end with a diameter of approx. 1 millimetre. This in turn creates holes in the electrically conducting material in the range from 1.5 millimetres to 2.5 millimetres in diameter, where the variation is caused by the voltage of the current, the current density and the electrolyte. Therefore, by keeping the distance between the anode and the cathode constant, i.e. having a continuous feed of anode into the hole in the material, a substantially continuous and relatively fast process is achieved.

In a further advantageous embodiment the tool has a cross section substantially corresponding to the area of the resulting ultra-thin section, and where said tool is substantially cylindrical, and that the cylindrical section on the outside is provided with a non-conductive coating.

As discussed above with reference to the diameter of the distal end of the cathode and the resulting aperture, the range of this aperture/holes may be minimized by further coating the anode on its outside with an electrically non-conducting coating so that the electro-chemical process only will take place at the very distal end of the tool. The non-conducting coating will isolate the anode from the cathode where the coating is present, whereas without the coating, electrochemical processes may occur on the sides of the tool whereby holes are made which holes do not have a well-defined cross-section and/or a non-homogenous cross-section due to inhomogenities in the materials.

Once the electrochemical process has reduced the material thickness to approx. 20 or 10 micrometers, the material is prepared for further workings and in order to create the translucent ultra-thin sections, a laser micromachining process is performed by a high-power laser device emitting ultrashort laser light pulses, where the pulse length is between 150 femtoseconds and 15 picoseconds, preferably 1 picosecond.

The pulse length, i.e. whether devices emitting 150 femtoseconds or 15 picoseconds pulse lengths are used or pulse length in between, depends on the type of laser device, the intensity of the laser, the laser-light repetition rate as well as the mode in which the laser is operated.

In a further advantageous embodiment the laser is controlled in a scanning mode, and scans the desired area of the ultra thin section in a predetermined pattern.

In scanning-mode it is possible to have the laser move back and forth, in a hatch pattern, or in circles inside the area where it is desired to make the cavity down to the ultra-thin section. Typically the diameter of the cavity will be 100 µm to 120 µm which size roughly corresponds to the size of one pixel in an LCD-screen.

Typically a laser-beam will have a Gaussian shape energy profile so that if the cross section of the energy profile was enlarged, it would have a shape so that the width of the profile would include a tip substantially arranged in the middle of the width section whereby a cavity will be created having slanted sides. In order to compensate for this, the laser beam may be treated in order to give it a so-called top-hat shape where the laser-beam is passed through beam shaping optics in order to create a homogeneous laser beam shape or alternatively an Excimer type laser is used.

The advantages of using beam-shaping optics is the fact that by transforming the laser-beam from the Gaussian profile to a substantially top-hat profile, a larger area of the laser-beam will be at the same level, so that a more even treatment of the surface will be achieved. The principle of reshaping a laser- beam may be carried out as described in "Aspheric laser-beam re-shaper applications guide" by C. Michael Jefferson and John A. Hoffnagel of IBM Almaden Research Center.

When using laser-beams and in particular when the laser-beams have been reshaped, a trepanning or percussion mode of the laser-beam has been found to be advantageous in that it is well-defined how much material is removed by each pulse of laser and thereby it becomes possible to very accurately guide and control the laser beam in order to create the cavity having an ultra-thin section left at the bottom of the hole.

In a further advantageous embodiment a light detector is arranged on the opposite side of the material from which the laser process is being performed, where said light detector is pre-programmed to switch off the laser device (the laser removing material) when a certain predetermined luminance is detected.

In a further advantageous embodiment a light-beam, e.g. a laser-beam is directed into the ultra thin section, and that a light detector is arranged on the opposite side of the material from which the laser process is being performed, where said light detector is pre-programmed to switch off the laser device (the laser removing material) when a certain predetermined luminance is detected. The light beam may be another second laser device having different characteristics from the working laser or may be the working laser.

The object of creating the ultra-thin sections is to provide translucent sections in an otherwise homogenous surface, so that when the material in which the ultra-thin sections are processed from the backside, the front side of said material will appear not to have undergone any changes. As a light source is arranged behind the ultra-thin sections, and light is emitted from said light source, the ultra-thin sections which are translucent will indicate to a user whatever desired input is needed or wanted. Therefore, in order to control the thickness of the ultra-thin section, a light source, e.g. a laser-beam, may be directed together with the working laser-beam into the cavity from the backside which light source is arranged in conjunction with a light detector on the front side of the material so that a as a certain luminance is detected by the light detector, a sufficiently thin, ultra-thin section is created and the working laser-beam may be switched off. By controlling the light detector and adjusting its sensitivity, it is possible in this manner to efficiently control the material thickness in the ultra-thin sections. Typically, as stated above, the average material thickness in the ultra-thin section will be 1-5 micrometers. This, of course, depends on the material on which the process is applied, but for most metallic materials this will be sufficient in order to visibly preserve the integrity of the surface from the front side of the material. Additionally, in case of Aluminium, an anodized layer will be formed on the surface, so that the combined thickness in the ultra-thin sections will be approx. 1-20 micrometers. It is, however, important that the material thickness of the remaining metal is less than 20 nanometers in the translucent regions.

In a further advantageous embodiment of the invention the electrochemical process creates a first cavity, inside which first cavity the laser micromachining process creates a number of second cavities, through which second cavities light may shine through, where the number of second cavities are in the range of 20 to 200 pr first cavity, more preferred 50 to 150 pr first cavity and most preferred 90 to 110 pr first cavity.

As already mentioned above, the cavities created by the laser beam have a diameter of approx. 100-120 µm roughly equivalent to the size of a pixel on an LCD-display. In order to be able to create a dot or a symbol when a light source shines through the ultra-thin section an array of second cavities is necessary so that a user watching the processed material from the front side will be able to distinguish a substantial illuminated dot or symbol, in that one single tiny pixel would not be enough.

The electrochemical process as explained above is able to create a substantially larger first cavity, i.e. the majority of the material is removed by the electrochemical process down to a safe depth of the cavity as already explained above. Within this cavity it is possible to create an array of second cavities by use of the laser beam in order to create the desired pattern of ultra-thin surfaces be it a dot, a symbol, a letter or any other desired pattern. By selecting an anode having the desired cross-section the desired cross-section of the first cavity may be created in one continuous process whereupon the laser beam creates the resulting ultra-thin surfaces. The anode may also be moved in order to create a longer first cavity.

As an example ultra-thin sections are created in aluminium-based materials where the material thickness is approx. 0.5-1 millimetre or 2 millimetres. The electrochemical process is commenced as described above where the electrolyte might be a sodium nitrate (NaNO₃) water solution having a concentration of 100 g per litre. The voltage is selected at 8 Volts whereby the current density will be in the interval 1-1.3 A/mm². Typically, the anode will advance 0.0125 millimetres per second into the material. As the electro-chemical machining reaches the desired depth, i.e. where a material thickness at the bottom of the cavity of 10-20 micrometers, the electrochemical machining is interrupted, the electrolyte removed and the laser micromachining process proceeds. Typically, the laser micromachining process from 10-20 micrometers and down to 1-5 micrometers, takes less than a second per hole, and as the laser has to work sequentially, i.e. one cavity at a time, and the laser beam needs to be repositioned between each cavity, it may take some time in order to create the number of cavities in an array. This, however, is much faster than using laser alone, and more precise than the electro-chemical machining alone.

Typically, the laser in scanning mode is operated at an intensity of 8 mW-200 mW where the pulse length was kept at 150 femtoseconds at 6 kHz, the wave length of 775 nm. Alternatively the intensity was operated at 100 mW to 1 W with pulse lengths of 10 picoseconds at 30-100 kHz with a wave length of 1064 nm. In the other modes, i.e. trepanning or percussion, the procedure was carried out with an intensity of 1 W, where the pulse length was 150 femtoseconds at 6 kHz at the same wave length as used in the scanning mode.

### Description of the drawing

Figure 1 illustrates the process of electrochemical machining.
Figure 2 illustrates the theoretical intensity distribution of a Gaussian laser and a tophat laser.
Figure 3 illustrates a schematic set-up for laser micromachining.
Figure 4 illustrates the finishes product by the combined process.

### Detailed description of the Invention

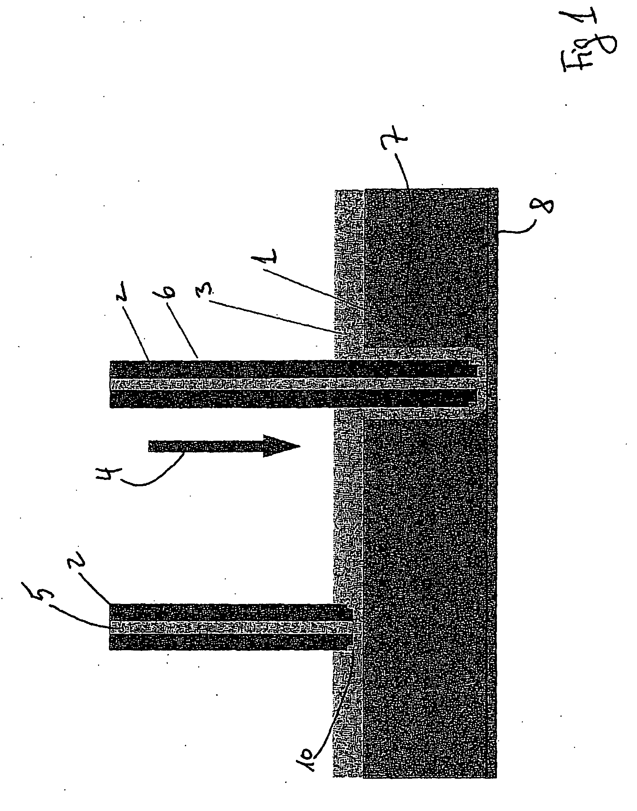

The combination of two processes as is the scope of the present invention provides a number of advantages over the processes seen alone and removes some of the disadvantages which the single processes have. Electrochemical micromachining does as explained with reference to figure 1 dissolve the material into which the blind holes are to be made by a controlled anodic electrochemical dissolution process where the work piece 1 is the anode and the tool 2 is the cathode. The process further requires an electrolyte 3 whereby an electrolytic cell is created, so that an electrolysis process between the anode 1 and the cathode 2 may take place. In this manner it is possible by further feeding the cathode as indicated by the arrow 4 into the material 1 to dissolve the material as indicated in the right hand side of figure 1. The electrolyte 3 is typically fed through a conduit 5 provided inside the tool. By further coating 6 the tool by non-conductive coating layer it is assured that the electrolysis process occurs at the distal end 10 of the tool.

The electrolyte is typically a salt solution in water. Sodium chloride or sodium nitrate as well as potassium nitrate may be used, but best results were found by using sodium nitrate (NaNO₃). The electrolysis process is driven by directing a current having a relatively high current density at low voltage between the work piece 1 and the tool 2. Thereby the anode-cathode process will dissolve the metal into metallic ions in a de-plating reaction. The metallic ions will react with OH- and will form hydroxide reaction products. The electrolyte and the reaction products will be removed as the electrolyte is continuously fed through the conduit 5 in the work piece. In this manner the cross section of the tool 2 will create an aperture 7 in the work piece 1.

The electrolyte further serves to remove the dissolved metal, the gases produced by the electrolysis process as well as removing heat from the working area. Therefore, the electrolyte is continuously fed through the conduit 5 in the tool 2. As there is no mechanical contact between the tool 2 and the work piece 1 and further the material removing process is electrochemical and therefore there is no contact between the two, there are no specific requirements to the hardness, toughness and so forth of the tool, and due to the nature of the process there is substantially no wear on the tool as such. The coating 6 provides for all electrochemical machining to take place at the distal end 10 of the tool. Therefore, it is possible to create substantially cylindrical holes i.e. blind holes where the sides of the holes are parallel in that any electrochemical processes along the tool's shaft may be avoided due to the non-conductive coating 6.

The electrochemical machining continues down to a material thickness of 10-20 µm indicated by the zone 8.

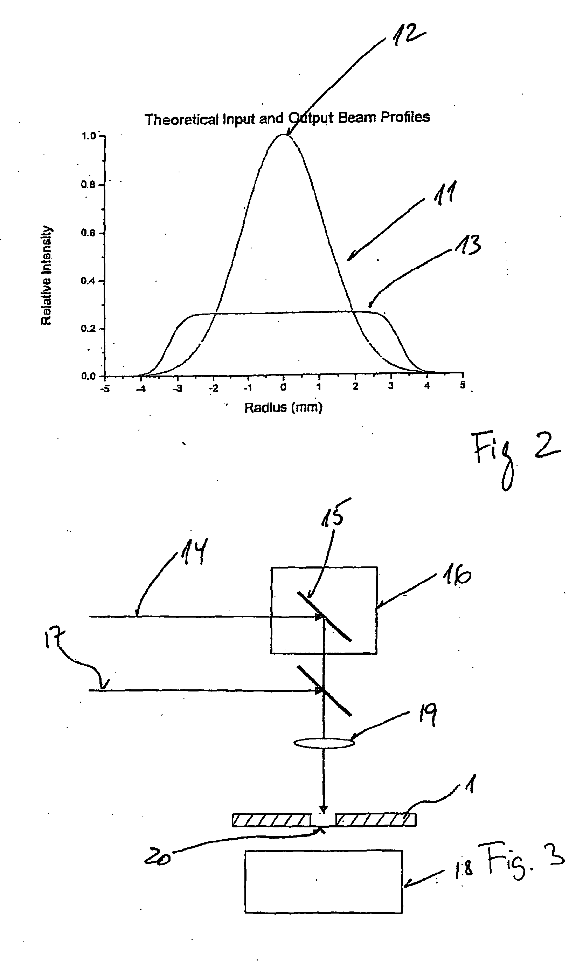

Turning to the further process of machining the final layers down to 1-5 µm thickness, attention is directed to figures 2 and 3.

In figure 2 are illustrated theoretical beam shapes of a laser beam. The laser beam indicated by 11 has a distribution corresponding to a Gaussian shape which will be the untreated shape of a laser beam. Therefore, when an untreated laser beam is used, the energy at the tip 12 will be very high so that the major part of material removal will occur at the tip and lessen towards the sides of the laser beam. This in turn indicates that was the laser cap stationary and pulsing, a hole having a shape as indicated by the curve 11 will be the result. By scanning such a beam in a predetermined pattern, the tip of the beam 12 will level the bottom of the hole so that a substantially even bottom may be created.

However, by applying reshaping techniques to the laser beam, e.g. by passing the laser beam through a pair of aspheric lenses with adapted focusing lens, it is possible to reshape the Gaussian curve into a so-called top-hat configuration as illustrated with reference to 13. An example of such a pair of beam shaping lenses is a pair of lenses where one is plano-convex and the other plano-concave. The characteristics of the beam 13 is the fact that the energy level is substantially constant and covers a much larger area of the tip of the beam so that it is possible to work larger surfaces at the same time. The energy needed in order to create the beam 12 or the beam 13 is equal.

The ultra-thin section is created firstly by the electrochemical machining process and thereafter by a laser micromachining process, using ultra-short laser pulses. For this purpose a schematic set-up as indicated in figure 3 is used. The working laser beam 14 is directed into mirrors 15 arranged in a scanner head 16. The scanner head will thereafter move the working laser beam in a predetermined pattern in order to create an ultra-thin section with the desired area and cross-section.

In order to determine when to interrupt the laser micromachining it is necessary to monitor the proceedings very carefully. This is in practice done by placing a light detector 18 on the opposite side of the material to be worked. As the light detector detects a predetermined amount of light passing the ultra-thin section 20, the working laser beam 14 is cut off, whereby further micromachining is halted. Better results were obtained by directing a further laser detection beam 17 into the working laser beam 14 and placing a light detector 18 on the opposite side of the material to be worked. In order to distinguish the two laser beams from each other they may be operated at different wavelengths and the light detector arranged accordingly. Alternatively, the further laser detection beam is continuous, while the working beam is pulsed. The detection system is synchronized with the working beam and the light is measured only between the pulses of the working beam, e.g. when the working laser beam is off.

A focusing lens 19 may be provided in order to concentrate the laser beam in specific points as explained above.

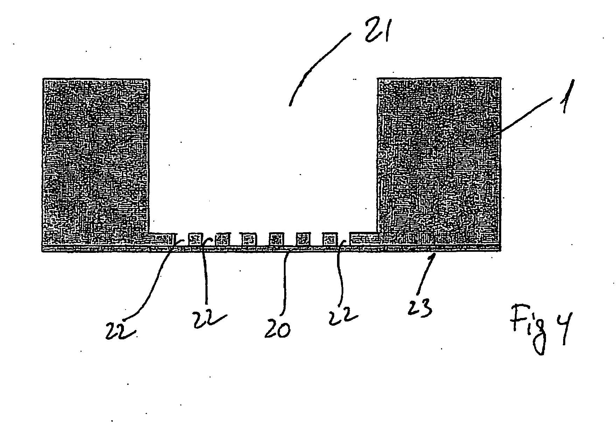

The result of the combined process is firstly processing the work piece 1 by an electro-chemical process as explained with reference to figure 1 and thereafter switching to a laser micromachining process as explained with reference to figure 3 which creates a material as roughly illustrated with reference to figure 4.

Firstly, a blind hole 21 has been created by means of the electrochemical machining after which the work piece 1 has been cleaned from electrolyte and other pollutants and thereafter exposed to the laser beam micromachining. The micromachining creates the blind holes 22. By creating an array of blind holes with the laser micro machining and only leaving an ultra-thin section 20, it is possible to place a light source adjacent the cavity 21 and shine light through the array of holes 22 so that on the undisturbed surface 23 of the work piece illumination will be provided through the ultra-thin sections 20. When no light is directed into the cavities the front surface appears undisturbed.

The ultra-thin section 20 may in fact be covered by a transparent oxide layer prior to the electrochemical micro machining step as is normal when aluminium is the base material.

In order to stabilize the structure the cavity 21 may be filled up with a transparent stabilizing material such as clear epoxy or the like. The only requirement for this filler is that it is possible to transmit light through the material so that the translucent regions created by the array of apertures 22 is not hampered by the stabilizing material filled into the cavity.

Above reference is made to high power laser devices emitting ultra short laser light pulses. Non limiting examples of such devices are generally referred to as femtosecond lasers or picosecond lasers.

## Claims

1. Process for the manufacture of ultra thin sections in an electrically conducting material, comprising:
- firstly removing material in an electrochemical process to a material thickness of approximately 10 to 20 micrometers, **characterised by**
- secondly removing further material by a laser micromachining process to a material thickness of 1 to 5 micrometers.

2. Process according to claim 1 wherein the electrochemical process is a controlled anodic dissolution process, where the material is the anode and a tool having a distal end acting as cathode so that a reaction cell is created between the anode and cathode, and that a salt containing electrolyte is led to the reaction cell through a conduit in the tool.

3. Process according to claim 2 wherein the electrolyte is forced through the conduit to the reaction cell, and where the distance between the anode and cathode during the dissolving process is maintained substantially constant.

4. Process according to claim 2 wherein the tool has a cross-section substantially corresponding to the area of the resulting ultra thin section, and where said tool is substantially cylindrical, and the cylindrical section on the outside is provided with a non-conductive coating.

5. Process according to claim 1 wherein the laser micromachining process is performed by a high power femtosecond laser device emitting laser light pulses, where the pulse length is between 150 femtoseconds and 15 picoseconds, preferably between 150 femtoseconds and 10 picoseconds and more preferably 1 picosecond.

6. Process according to claim 5 wherein the laser is controlled in a scanning mode and scans the desired area of the ultra thin section in a predetermined pattern.

7. Process according to claim 5 wherein the laser beam is passed through beam shaping optics in order to create a homogeneous laser beam shape or an Excimer type laser is used.

8. Process according to claim 1 or 5 to 7 wherein a light detector is arranged on the opposite side of the material from which the laser process is being performed, where said light detector is preprogrammed to switch off the laser device when a certain predefined luminance is detected.

9. Process according to claims 1 or 5 to 7 wherein a light beam, for example a laser beam, is directed into the ultra thin section, and where a light detector is arranged on the opposite side of the material from which the laser process is being performed, where said light detector is pre-programmed to switch off the laser device when a certain predetermined luminance is detected.

10. Process according to claim 1 wherein the electrochemical process creates a first cavity, inside which first cavity the laser micromachining process creates a number of second cavities, through which second cavities light may shine through, where the number of second cavities is in the range of 20 to 200 pr first cavity, more preferred 50 to 150 pr first cavity and most preferred 90 to 110 pr first cavity.

## Patentansprüche

1. Verfahren zum Herstellen von ultradünnen Teilabschnitten in einem elektrisch leitenden Material, umfassend folgende Verfahrensschritte:
- erstens Abheben von Material in einem elektrochemischen Vorgang bis zu einer Materialstärke von etwa 10 bis 20 Mikrometer,
**gekennzeichnet durch**
- zweitens Abheben von weiterem Material **durch** einen Laser-Mikrobearbeitungsprozeß bis zu einer Materialstärke von 1 bis 5 Mikrometer.

2. Verfahren nach Anspruch 1, wobei der elektrochemische Vorgang ein geregelter anodischer Auflösungsvorgang ist, wo das Material die Anode ist und ein ein distales Ende aufweisendes Werkzeug als Kathode tätig ist, so daß eine Reaktionszelle zwischen der Anode und der Kathode gestaltet wird, und daß ein salzhaltiger Elektrolyt durch einen Kanal im Werkzeug zur Reaktionszelle geleitet wird.

3. Verfahren nach Anspruch 2, wobei der Elektrolyt durch den Kanal zur Reaktionszelle gepreßt wird, und wo der Abstand zwischen der Anode und der Kathode während des Auflösungsprozesses im wesentlichen konstant gehalten wird.

4. Verfahren nach Anspruch 2, wobei das Werkzeug einen im wesentlichen dem Gebiet des sich ergebenden ultradünnen Abschnittes entsprechenden Querschnitt aufweist, und wobei das Werkzeug im wesentlichen zylindrisch ist, und der zylindrische Abschnitt an der Außenseite eine nichtleitende Beschichtung aufweist.

5. Verfahren nach Anspruch 1, wobei der Laser-Mikrobearbeitungsprozeß durch ein Lichtimpuls-emittierendes Hochleistungs-Femtosekunden-Lasergerät durchgeführt wird, wobei die Impulsdauer zwischen 150 Femtosekunden und 15 Picosekunden beträgt, vorzugsweise zwischen 150 Femtosekunden und 10 Picosekunden und am meisten bevorzugt 1 Picosekund.

6. Verfahren nach Anspruch 5, wobei der Laser in einem Abtastmodus geregelt wird und das erwünschte Gebiet des ultradünnen Teilabschnittes in einem vorbestimmten Muster abtastet.

7. Verfahren nach Anspruch 5, wobei der Laserstrahl zur Gestaltung eines homogenen Laserstrahls durch strahlgestaltende optischen Mittel gesteuert wird, oder ein Laser des Excimer-Typs verwendet wird.

8. Verfahren nach Anspruch 1 oder 5 bis 7, wobei ein Fotodetektor an der gegenüberliegenden Seite des Materials, von der der Laservorgang durchgeführt wird, angeordnet ist, wobei der Lichtabtaster zum Abschalten des Lasergeräts beim Abtasten einer gewissen, vorbestimmten Leuchtdichte vorprogrammiert ist.

9. Verfahren nach den Ansprüchen 1 oder 5 bis 7, wobei ein Lichtstrahl, z.B. ein Laserstrahl, auf den ultradünnen Abschnitt gerichtet wird, und wobei ein Lichtabtaster an der gegenüberliegenden Seite des Materials, von der der Laservorgang durchgeführt wird, angeordnet ist, wobei der Lichtabtaster zum Abschalten des Lasergeräts beim Abtasten einer gewissen, vorbestimmten Leuchtdichte vorprogrammiert ist.

10. Verfahren nach Anspruch 1, wobei der elektrochemische Vorgang einen ersten Hohlraum gestaltet, in dem der Laser-Mikrobearbeitungsprozeß eine Anzahl von zweiten, lichtdurchschienbaren Hohlräumen gestaltet, wobei die Anzahl von zweiten Hohlräumen im Bereich 20 bis 200 pro ersten Hohlraum, vorzugsweise 50 bis 150 pro ersten Hohlraum und am meisten bevorzugt 90 bis 110 pro ersten Hohlraum beträgt.

## Revendications

1. Procédé pour la fabrication de sections ultraminces dans un matériau conducteur de l'électricité, comprenant :
- premièrement l'enlèvement de matériau selon un traitement électrochimique jusqu'à une épaisseur de matériau d'environ 10 à 20 microns ;
**caractérisé par** :
- deuxièmement l'enlèvement de matériau supplémentaire à l'aide d'un procédé de micro-usinage à laser jusqu'à une épaisseur de matériau d'environ 1 à 5 microns.

2. Procédé selon la revendication 1, selon lequel le traitement électrochimique est un processus de dissolution anodique commandé, selon lequel le matériau est l'anode et un outil possédant une extrémité distale agit comme cathode de façon à ce qu'une pile de réaction soit créée entre l'anode et la cathode, et qu'un électrolyte contenant un sel soit amené vers la pile de réaction à travers un conduit dans l'outil.

3. Procédé selon la revendication 2, selon lequel l'électrolyte est forcé à travers le conduit vers la pile de réaction, et selon lequel la distance entre l'anode et la cathode lors du processus de dissolution est maintenue sensiblement constante.

4. Procédé selon la revendication 2, selon lequel l'outil possède une section transversale correspondant sensiblement à la surface de la section ultramince résultante, et selon lequel ledit outil est sensiblement cylindrique, et la section cylindrique sur le côté extérieur est munie d'un revêtement non-conducteur.

5. Procédé selon la revendication 1, selon lequel le procédé de micro-usinage à laser est appliqué à l'aide d'un dispositif de laser femtoseconde à haute puissance émettant des impulsions de lumière laser, selon lequel la longueur d'impulsion est comprise entre 150 femtosecondes et 15 picosecondes, de préférence entre 150 femtosecondes et 10 picosecondes et plus de préférence 1 picoseconde.

6. Procédé selon la revendication 5, selon lequel le laser est commandé selon un mode à balayage et balaye la surface désirée de la section ultramince selon un tracé prédéterminé.

7. Procédé selon la revendication 5, selon lequel le faisceau laser est dirigé à travers un groupe optique d'uniformisation de faisceau de façon à créer une forme homogène de faisceau laser ou un laser du type à excimères est utilisé.

8. Procédé selon la revendication 1 ou 5 à 7, selon lequel un détecteur de lumière est disposé sur le côté opposé du matériau à partir duquel le traitement par laser est appliqué, selon lequel ledit détecteur de lumière est programmé à l'avance pour éteindre le dispositif de laser lorsqu'une certaine luminance prédéterminée est détectée.

9. Procédé selon les revendications 1 ou 5 à 7, selon lequel un faisceau de lumière, par exemple un faisceau laser, est dirigé dans la section ultramince, et selon lequel le détecteur de lumière est disposé sur le côté opposé du matériau à partir duquel le traitement par laser est appliqué, selon lequel ledit détecteur de lumière est programmé à l'avance pour éteindre le dispositif de laser lorsqu'une certaine luminance prédéterminée est détectée.

10. Procédé selon la revendication 1, selon lequel le traitement électrochimique crée une première cavité, première cavité dans laquelle le processus de micro-usinage à laser crée un certain nombre de secondes cavités, secondes cavités à travers lesquelles la lumière peut rayonner, selon lequel le nombre de secondes cavités est compris entre 20 à 200 par première cavité, plus de préférence entre 50 et 150 par première cavité et le plus de préférence entre 90 et 110 par première cavité.
